# EUROPEAN PATENT SPECIFICATION

(11) **EP 1 972 800 B1**
(45) Date of publication and mention of the grant of the patent: **10.03.2010**
(21) Application number: 07104804.5
(22) Date of filing: 23.03.2007
(51) Int. Cl.: F16B 25/00

(54) **Screw**
Schraube
Vis

(43) Date of publication of application: 24.09.2008
(73) Proprietor: Hsu, Tai-Ping, 822 Kaohsiung county (TW)
(72) Inventor: Hsu, Tai-Ping, 822 Kaohsiung county (TW)
(74) Representative: Chaillot, Geneviève

(56) References cited:
- EP-A- 0 319 812
- GB-A- 1 120 991
- US-A- 3 233 500
- US-A- 4 161 132
- US-A- 5 674 035

## Description

### BACKGROUND OF THE INVENTION

### 1. Field of the Invention

The present invention relates to a screw design, particularly to a screw which is benefit at saving user's labor and fastening into the object.

### 2. Description of the Related Art

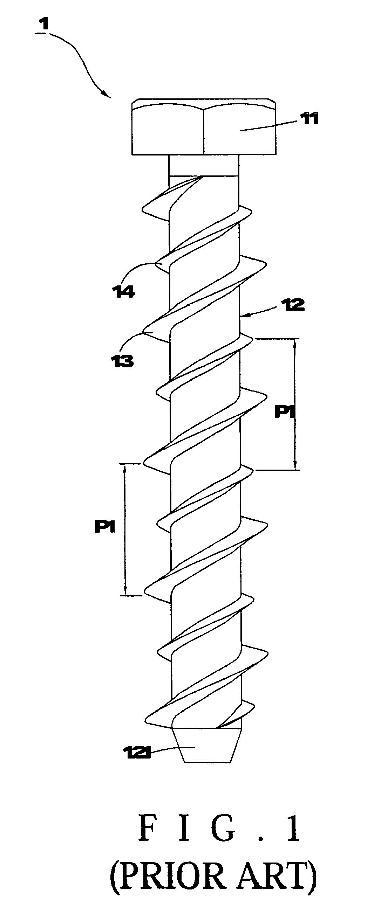

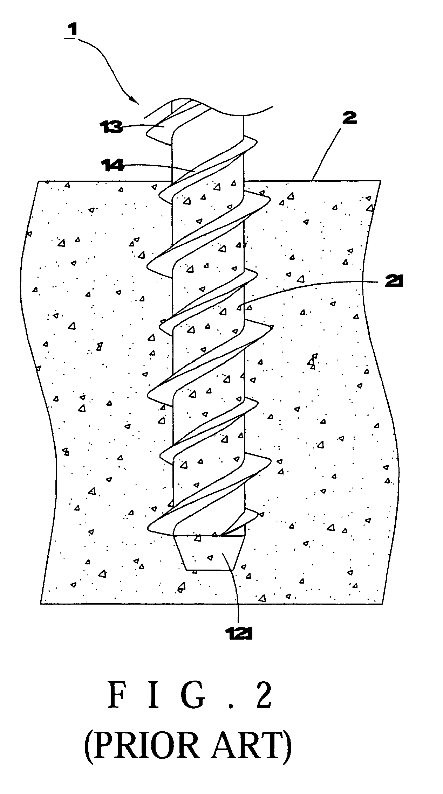

Referring to Fig. 1, a conventional screw 1 comprises a head 11, a shank 12 connecting to the head 11, and a first threaded section 13 and a second threaded section 14 spirally disposed on the shank 12; wherein, the shank 12 forms a drilling portion 121thereon opposite to the said head 11; moreover, the first threaded section 13 and the second threaded section 14 are spirally disposed along the same direction and are interlaced; still further, the thread height of the first threaded section 13 exceeds the thread height of the second threaded section 14, a bigger pitch P1 is therefore formed between any two first threaded sections or any two second thread sections. Referring to Fig. 2, while the conventional screw 1 screws into a concrete object 2, the first threaded section 13 and the second threaded section 14 cut the concrete object 2, and the debris 21 cut from the concrete obj ect 2 is accumulated inside the first threaded section 13 and the second threaded section 14 the conventional screw 1 be well fixed to the concrete object 2.

US 4 161 132 discloses a self-tapping screw, particularly for use in hard materials, such as bricks, concrete and rock, having a screw thread comprising a plurality of circumferentially successive thread portions between which there are voids, wherein at least the front end of each such thread portion is smoothly rounded from the central essentially cylindrical core portion of the screw and rearwardly toward the apex of the screw thread portion.

### SUMMARY OF THE INVENTION

It is therefore the purpose of this invention to provide a screw which is benefit at saving user's labor and is able to avoid the problem of reaming while in operation, further to fasten itself into a concrete obj ect.

The screw in accordance with the present invention comprises a head, a shank connecting to said head, and a first threaded section and a second threaded section spirally disposed on said shank; wherein, said two threaded sections connect to each other; moreover, said first threaded section is a continuous threaded section, and said second threaded section is a non-continuous threaded section; furthermore, each thread of said second threaded section has a convex area and a concave area interlaced. While in operation, due to that said two threaded sections which is a single-threaded type, the user is capable of spending less labor on screwing. Moreover, the situation of holding the screwing tool hardly and being hard to firmly bestow the labor is able to be avoided, and the debris cut from the concrete object can be accumulated inside said second threaded section and connected together. Therefore, the present invention will be fastened into the concrete object after screwing.

The advantages of the present invention over the known prior art will become more apparent to those of ordinary skilled in the art upon reading the following descriptions in conjunction with the accompanying drawings.

### BRIEF DESCRIPTION OF THE DRAWINGS

Fig. 1 is a perspective view showing a conventional screw;
Fig. 2 is a schematic view showing said conventional screw screwing;
Fig. 3 is a perspective view showing the first preferred embodiment of the present invention;
Fig. 4 is a perspective view showing the second preferred embodiment of the present invention;
Fig. 5 is a schematic view showing said first preferred embodiment screwing; and
Fig. 6 is a schematic view showing the third preferred embodiment of the present invention.

### DETAILED DESCRIPTION OF THE PREFERRED EMBODIMENTS

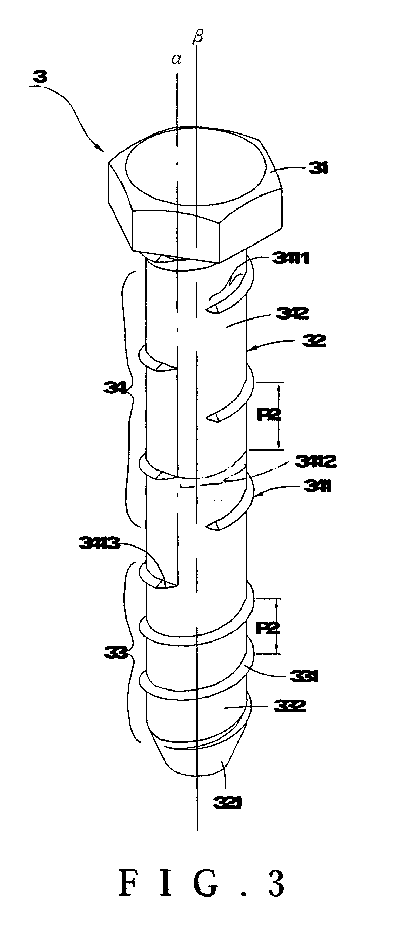

Referring to Fig. 3, the screw 3 of the first preferred embodiment comprises a head 31, a shank 32 connecting to the head 31, a first threaded section 33 and a second threaded section 34 spirally disposed on the shank 32; wherein, the shank 32 forms a drilling portion321 thereon opposite to the head 31, and the drilling portion 321 can be a drilling member, a sharp point, or a narrowing shank. In this preferred embodiment, the drilling portion 321 is a gradually narrowing shank.

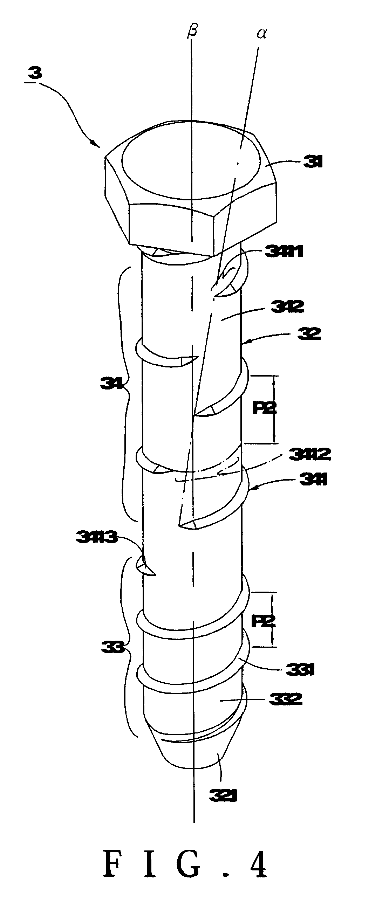

Continuing with the last paragraph, the first threaded section 33 and the second threaded section 34 are consisted of a plurality of threads 331 , 341 respectively, and a plurality of valleys 332, 342 are formed between the adjacent threads 331, 341, and the width of each two valleys 332, 342 is a pitch P2. Moreover, the first threaded section 33 is disposed near the drilling portion 321 and is a continuous threaded section, and the second threaded section 34 is disposed near the head 31. Furthermore, the first threaded section 33 and the second threaded section 34 connect to each other. Therefore, the threads 331 of the first threaded section 33 and the threads 341 of the second threaded section 34 do not need to be spirally disposed on the shank 32 in a smooth inclined angle. Still further, the second threaded section 34 is a non-continuous threaded section, which means each thread 341 of the second threaded section 34 has a convex area 3411 and a concave area 3412 lower than the convex area 3411 interlaced, and each two adjacent valleys 342 connect to each other through the concave area 3412. Moreover, each convex area 3411 forms an inclined surface 3413 to contact the adjacent concave area 3412. Furthermore, in this preferred embodiment, the corresponding concave areas 3412 of the threads 341 of the second threaded section 34 are combined to form an imaging line α parallel with the central line β of the shank 32 ; the imaging lineα is inclined to the central line β of the shank32 as shown in Fig. 4, and in this preferred embodiment the parallel type is taken as an example.

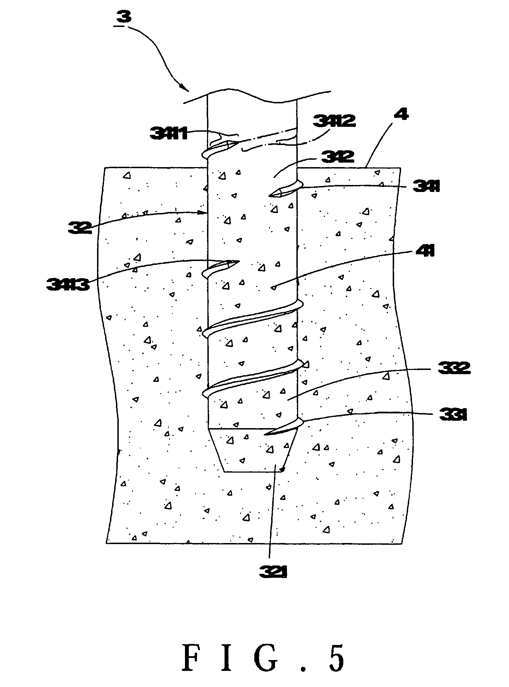

Referring to Fig. 5, while screwing into the concrete object 4, at first, the continuous threads 331 of the first threaded section 33 are used to cut, further accompanying with the threads 331 of the first threaded section 33 are not very inclined to the shank 32 and the debris formed by cutting smoothly obviated through the concave 3412, the user hence can save more labor and the screw 3 easily screwed into the concrete object 4. Relatively, the user can hold the screwing tool firmly and bestow the labor downward to the screw 3 vertically; therefore, the problem of reaming will not happen. Then, the second threaded section 34 screws into the concrete object 4 along the cutting track of the first threaded section 33. Meanwhile, the debris cut from the concrete object 4 can be accumulated inside the valleys 332, 342. Furthermore, because the second threaded section 34 is a non-continuous threaded section, said debris can be accumulated therein through the concave areas 3412 to connect in extensiveness and help the screw 3 fastened into the concrete object 4 firmly.

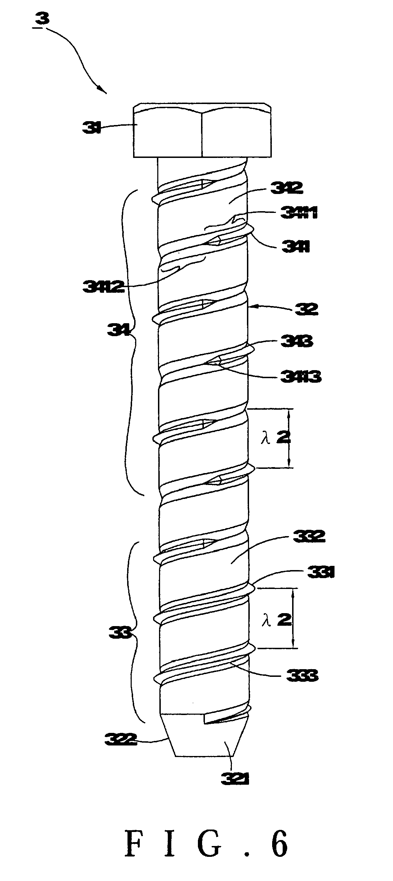

Referring to Fig. 6, this drawing shows the third preferred embodiment of the present invention, and most of its factors are the same as the screw 3 of the first preferred embodiment, which is in particular to two grooves 333, 343 respectively disposed beside the first threaded section 33 and the second threaded section 34, and said grooves 333 and 343 spirally disposed on the shank 32 connect to each other. While in operation, the grooves 333, 343 are benefit at obviating the debris. The debris cut by the first threaded section 33 and the second threaded section 34 can be obviated smoothly along the grooves 333, 343, and hence the grooves 333, 343 are benefit at screwing. Therefore, the screw 3 can be firmly screwed into the concrete object 4.

According to the prior description, and comparing the present invention and the conventional screw, we can find that the present invention certainly has the following advantages and efficacies:
1. Due to the threads of the first threaded section are not very inclined to the shank and the pitches of the present invention are smaller than the pitches of the conventional screw, the threads of the present invention are not as inclined as the threads of the conventional screw; furthermore accompanying with the non-continuous threads of the second threaded section for the benefit of obviating the debris and avoid to accommodate too much debris therein. Therefore, the user can save more labor while screwing. The present invention surely increases the user's convenience.
2. Continuing with the last point, while in operation, due to the user bestows less labor to the present invention than to the conventional screw, the screwing angle will be small and the user can easily hold the screwing tool and bestow the labor firmly. The screw hence will not rotate idly while it is screwed into the concrete object, then the problem of reaming and the screw broken will not happen. Therefore, the present invention can have the effect on screwing and can be fastened into the concrete object firmly.
3. Due to the non-continuous second threaded section, the debris can be accumulated therein, the present invention can be well screwed can be fastened into the concrete object firmly.

To sum up, the present invention makes use of the pitches of the first and second threaded section smaller than those of the conventional screw to increase the screwing; therefore, while in operation, the user can easily hold the screwing tool and can bestow the labor firmly, the screw hence can be avoided from inclining on one side and the problem of reaming can also be prevented. Furthermore, the debris from cutting is accumulated in the second threaded section, and said debris forms a series connection, the present invention hence can be well screwed and fastened into the concrete object. Therefore, the present invention can really achieve its purpose.

While we have shown and described the embodiment in accordance with the present invention, it should be clear to those skilled in the art that further embodiments may be made without departing from the scope of the present invention.

## Claims

1. A screw (3) for screwing into concrete objects (4) comprising:
a head (31);
a shank (32) connecting to said head (31); and
a first threaded section (33) and a second threaded section (34) spirally disposed on said shank (32);
wherein, said shank (32) forms a drilling portion (321) at a distal end thereof, and said two threaded sections (33, 34) both consist of a plurality of threads (331, 341), and a valley (332, 342) is formed between each two adjacent threads (331, 341);
wherein said first threaded section (33) is disposed near said distal end and said second threaded section (34) is disposed near said head (31); wherein said two threaded sections (33, 34) connect to each other and the width of each two valleys (332, 342) is a same pitch (P2) so that said two threaded sections (33, 34) are of a single-threaded type; **characterized in that** said first threaded section (33) is a continuous threaded section, and said second threaded section (34) is a non-continuous threaded section, each said thread (341) of said second threaded section (34) having a convex area (3411) and a concave area (3412) interlaced so that each two adjacent valleys (342) connect to each other through said concave area, and the spacing along a central line (β) of said shank (32) between two corresponding convex areas (3411) is of two pitches (P2).

2. The screw (3) as claimed in claim 1, wherein the corresponding concave areas (3412) of the threads (341) of said second threaded section (34) are combined to form an imaging line (α), and said imaging line (α) is parallel to the central line (β) of said shank (32).

3. The screw (3) as claimed in claim 1, wherein said corresponding concave areas (3412) of said threads (341) of said second threaded section (34) are combined to form an imaging line (α), and said imaging line (α) is inclined to the central line (β) of said shank (32).

4. The screw (3) as claimed in claim 1, wherein two grooves (333,343) are respectively disposed beside said first threaded section (33) and said second threaded section (34), and said two grooves (333,343) connect to each other and spirally disposed on the shank (32).

5. The screw (3) as claimed in claim 1, wherein each convex area (3411) forms an inclined surface (3413) to contact the adjacent concave area (3412).

## Patentansprüche

1. Eine Schraube (3), für eine Verschraubung in Betongegenstände (4), enthält:
einen Kopf (31);
einen mit dem Kopf (31) verbundenen Schaft (32);
einen ersten Gewindeteil (33) und einen zweiten Gewindeteil (34), die beide auf dem Schaft (32) spiralförmig angeordnet sind;
**dadurch gekennzeichnet, dass** ein Bohrabschnitt (321) am distalen Ende des Schaftes (32) geformt wird; die beiden Gewindeteile (33, 34) jeweils aus vielen Gewinden (331, 341) bestehen; ein Tal (332, 342) zwischen jeden Gewindeteil (33, 34) geformt wird;
**dadurch gekennzeichnet, dass** der erste Gewindeteil (33) in der Nähe dem distalen Ende angeordnet ist und der zweite Gewindeteil (34) in der Nähe dem Kopf (31) angeordnet ist; die beiden Gewindeteile (33, 34) miteinander verbunden sind, und die Breite von jedem den zwei Tälern (332, 342) eine selbe Teilung (P2) ist, so dass die beiden Gewindeteile (33, 34) von einem einzelnen Gewinde geformt werden; der erste Gewindeteil (33) ein kontinuierliche Gewindeteil ist, und der zweite Gewindeteil (34) ein nicht kontinuierliche Gewindeteil ist; jede Gewinde (341) des zweiten Gewindeteils (34) ein mit einem konkaven Gebiet (3412) verflechtete konvexes Gebiet (3411) hat, so dass jeweils die zwei angrenzende Täler (342) durch dem konkaven Gebiet zusammen verbunden sind; der Abstand entlang einer Mittellinie (β) des Schafts (32) zwischen zwei entsprechenden konvexen Gebieten (3411) zwei Teilungen (P2) beträgt.

2. Eine Schraube (3) nach Anspruch 1, **dadurch gekennzeichnet, dass** die entsprechenden konkaven Gebiete (3412) der Gewinde (341) des zweiten Gewindeteiles (34) verbunden sind, um eine eingebildete Linie (α) zu formen, und die eingebildete Linie (α) zu die Mittellinie (β) des Schaft (32) parallel verläuft.

3. Eine Schraube (3) nach Anspruch 1, **dadurch gekennzeichnet, dass** die entsprechenden konkaven Gebiete (3412) der Gewinde (341) des zweiten Gewindeteiles (34) verbunden werden, um eine imaginäre Linie (α) zu formen, und die imaginäre Linie (α) nach die Mittellinie (β) des Schafts (32) geneigt ist.

4. Eine Schraube (3) nach Anspruch 1, **dadurch gekennzeichnet, dass** zwei Schlitze (333, 343) jeweils neben dem ersten Gewindeteil (33) und dem zweiten Gewindeteil (34) angeordnet sind, und die Schlitze (333, 343) miteinander verbunden sind und spiralförmig auf dem Schaft (32) angeordnet sind.

5. Eine Schraube (3) nach Anspruch 1, **dadurch gekennzeichnet, dass** das konvexe Gebiet (3411) eine geneigte Fläche (3413) formt, um mit dem angrenzenden konkaven Gebiet in Kontakt zu stehen.

## Revendications

1. Vis (3) pour vissage dans des pièces en béton (4), comprenant:
une tête (31);
une tige (32) reliée à ladite tête (31) ; et
une première section filetée (33) et une seconde section filetée (34) disposées en spirale sur ladite tige (32) ;
dans laquelle, ladite tige (32) forme une partie de perçage (321) à une extrémité distale de celle-ci, et lesdites deux sections filetées (33, 34) se composent toutes les deux d'une pluralité de filets (331,341) et une vallée (332, 342) est formée entre chacun des deux filets adjacents (334, 341) ;
dans laquelle ladite première section filetée (33) est disposée à proximité de ladite extrémité distale et ladite seconde section filetée (34) est disposée à proximité de ladite tête (31) ; lesdites deux sections filetées (33, 34) étant reliées l'une à l'autre, et la largeur de chacune des deux vallées (332, 342) étant un même pas (P2), de telle sorte que lesdites deux sections filetées (33, 34) sont de type à un filet ; **caractérisée par le fait que** ladite première section filetée (33) est une section filetée continue, et que ladite seconde section filetée (34) est une section filetée non continue, chaque filet précité (341) de ladite seconde section filetée (34) ayant une zone convexe (3411) et une zone concave (3412) entrelacées, de telle sorte que chacune des deux vallées adjacentes (342) sont reliées l'une à l'autre par ladite zone concave, et l'espacement le long d'une ligne médiane (β) de ladite tige (32) entre deux zones convexes correspondantes (3411) étant de deux pas (P2).

2. Vis (3) selon la revendication 1, dans laquelle les zones concaves correspondantes (3412) des filets (341) de ladite seconde section filetée (34) sont combinées pour former une ligne imaginaire (α), et ladite ligne imaginaire (α) est parallèle à la ligne médiane (β) de ladite tige (32).

3. Vis (3) selon la revendication 1, dans laquelle lesdites zones concaves correspondantes (3412) desdits filets (341) de ladite seconde section filetée (34) sont combinées pour former une ligne imaginaire (α), et ladite ligne imaginaire (α) est inclinée vers la ligne médiane (β) de ladite tige (32).

4. Vis (3) selon la revendication 1, dans laquelle deux rainures (333, 343) sont disposées respectivement à côté de ladite première section filetée (33) et de ladite seconde section filetée (34), et lesdites deux rainures (333, 343) sont reliées l'une à l'autre et disposées en spirale sur la tige (32).

5. Vis (3) selon la revendication 1, dans laquelle chaque zone convexe (3411) forme une surface inclinée (3413) pour être en contact avec la zone concave adjacente (3412).
